# EUROPÄISCHE PATENTSCHRIFT

(11) **EP 2 742 258 B1**
(45) Veröffentlichungstag und Bekanntmachung des Hinweises auf die Patenterteilung: **06.04.2016**
(21) Anmeldenummer: 12742886.0
(22) Anmeldetag: 30.07.2012
(51) Int. Cl.: B60K 6/48, F16H 1/22, F16H 3/00

(54) **KRAFTFAHRZEUGGETRIEBE**
MOTOR VEHICLE TRANSMISSION
TRANSMISSION DE VÉHICULE AUTOMOBILE

(30) Priorität: 08.08.2011 DE 102011080560
(43) Veröffentlichungstag der Anmeldung: 18.06.2014
(73) Patentinhaber: ZF Friedrichshafen AG, 88038 Friedrichshafen (DE)
(72) Erfinder: WECHS, Michael, 88138 Sigmarszell (DE)
(86) Internationale Anmeldenummer: PCT/EP2012/064872
(87) Internationale Veröffentlichungsnummer: WO 2013/020850

(56) Entgegenhaltungen:
- DE-A1-102006 054 281
- DE-A1-102007 040 449
- DE-A1-102009 020 550
- TENBERGE P: "Double-Clutch Transmission - Power-Shiftable Winding Transmission", VDI BERICHTE, DUESSELDORF, DE, Bd. 1665, 13. März 2002 (2002-03-13), Seiten 1033-1050, XP009094673, ISSN: 0083-5560

## Beschreibung

Die Erfindung betrifft ein Kraftfahrzeuggetriebe, umfassend zwei Teilgetriebe, die über koaxial zueinander angeordnete Eingangswellen verfügen und jeweils abwechselnd durch Verbinden der je zugeordneten Eingangswelle mit einem Antrieb in einen Kraftfluss zu einem Abtrieb einbindbar sind, wobei die Eingangswelle des ersten Teilgetriebes als Getriebezentralwelle und die Eingangswelle des zweiten Teilgetriebes als Getriebehohlwelle ausgeführt ist, wobei der Antrieb beider Teilgetriebe durch eine koaxial zu den Eingangswellen platzierte Ausgangswelle gebildet und parallel zu den Eingangswellen und der Ausgangswelle ein Vorgelege vorgesehen ist, und wobei eine vom Antrieb auf den Abtrieb übertragene Drehbewegung mit einem von mehreren diskreten Übersetzungsverhältnissen übersetzbar ist, welche jeweils durch Führen des Kraftflusses über das Vorgelege über zumindest zwei Stirnradstufen und durch Betätigung mindestens einer zugehörigen Schalteinrichtung unter Wechsel zwischen den Teilgetrieben lastschaltbar darstellbar sind.

Derartige Kraftfahrzeuggetriebe werden unter anderem als sogenannte Doppelkupplungsgetriebe ausgeführt, bei welchen die Eingangswellen der beiden Teilgetriebe über ein je zugehöriges Lastschaltelement mit einem Antrieb verbunden werden können, wobei die beiden Lastschaltelemente dabei dann in einer Doppelkupplung zusammengefasst sind. Die über ein solches Kraftfahrzeuggetriebe darstellbaren Gänge sind dabei wechselweise auf die beiden Teilgetriebe aufgeteilt, so dass das eine Teilgetriebe die ungeraden Gänge und das andere Teilgetriebe die geraden Gänge darstellt. Üblicherweise werden die einzelnen Gänge dabei durch ein oder mehrere Stirnradstufen mit jeweils diskreten Übersetzungen definiert, wobei diese Stirnradstufen dann durch zugehörige Schalteinrichtungen in den Kraftfluss einbindbar sind, so dass eine entsprechende Übersetzung zwischen dem Antrieb und dem Abtrieb des Kraftfahrzeuggetriebes dargestellt wird. Durch die wechselweise Aufteilung der Gänge auf die beiden Teilgetriebe ist es möglich, beim Fahren in einem dem einen Teilgetriebe zugeordneten Gang in dem jeweils anderen Teilgetriebe durch entsprechende Betätigung der Schalteinrichtungen bereits einen darauf folgenden Gang vorzuwählen, wobei ein letztendlicher Wechsel in den darauf folgenden Gang durch Öffnen des Lastschaltelements des einen Teilgetriebes und kurz darauf folgendes Schließen des Lastschaltelements des anderen Teilgetriebes darstellbar ist. Hierdurch können die Gänge des Kraftfahrzeuggetriebes unter Last geschaltet werden, was ein Beschleunigungsvermögen des Kraftfahrzeugs aufgrund eines nahezu zugkraftunterbrechungsfreien Gangwechsels verbessert und komfortablere Schaltvorgänge ermöglicht. Unter anderem werden Doppelkupplungsgetriebe hierbei auch mit koaxial zueinander liegendem Antrieb und Abtrieb, sowie einem hierzu parallelen Vorgelege ausgeführt, so dass in radialer Richtung ein kompakter Aufbau realisierbar ist. Ferner sind Ausgestaltungen von Doppelkupplungsgetrieben bekannt, bei welchen die einzelnen Gänge des Getriebes durch Führen des Kraftflusses über mehrere Stirnradstufen dargestellt werden, so dass gegenüber herkömmlichen Getrieben eine entsprechend große Anzahl an Gängen mit wenigen Stirnradstufen dargestellt werden kann.

Aus der DE 10 2006 054 281 A1 geht ein derartiges Kraftfahrzeuggetriebe hervor, welches als Doppelkupplungsgetriebe ausgestaltet ist und zwei Teilgetriebe mit koaxial zueinander angeordneten Eingangswellen umfasst. Durch Verbinden der je zugeordneten Eingangswelle über ein jeweiliges Lastschaltelement können die beiden Teilgetriebe jeweils abwechselnd in einen Kraftfluss von einem Antrieb zu einem Abtrieb eingebunden werden, wobei die Eingangswelle des ersten Teilgetriebes dabei als Getriebezentralwelle und die Eingangswelle des zweiten Teilgetriebes als Getriebehohlwelle ausgeführt ist. Koaxial zu den beiden Eingangswellen ist eine den Abtrieb beider Teilgetriebe ausbildende Ausgangswelle vorgesehen, wobei eine Drehbewegung des Antriebs mit einem von mehreren diskreten Übersetzungsverhältnissen auf den Abtrieb übersetzbar ist, indem der Kraftfluss über ein parallel zu den Eingangswellen und der Ausgangswelle vorgesehenes Vorgelege geführt wird. Hierbei werden zumindest zwei Stirnradstufen mit jeweils einer diskreten Übersetzung mittels Betätigung zugehöriger Schalteinrichtungen in den Kraftfluss geschaltet, wobei durch Kombination der Betätigung der Schalteinrichtungen und das dementsprechende Führen des Kraftflusses über die zugehörigen Stirnradstufen die mehreren Übersetzungsverhältnisse dargestellt werden können. Daneben ist jedoch auch eine direkte Übertragung der Drehbewegung der Getriebezentralwelle auf die Ausgangswelle durch Betätigung einer dazwischenliegenden Schalteinrichtung möglich.

Die gattungsgemäße DE 10 2007 040 449 A1 offenbart ebenfalls ein Doppelkupplungsgetriebe mit zwei Teilgetrieben mit koaxial zueinander angeordneten Eingangswellen. Auch hier ist eine Drehbewegung des Antriebs mit einem von mehreren diskreten Übersetzungsverhältnissen auf den Antrieb übertragbar, indem der Kraftfluss über ein parallel zu den Eingangswellen und der Ausgangswelle angeordnetes Vorgelege geführt wird. Die Hohlwelle des zweiten Teilgetriebes ist dabei über eine erste Stirnradstufe mit einer Vollwelle des Vorgeleges verbunden, und die Zentralwelle des ersten Teilgetriebes ist durch eine zweite Stirnradstufe mit einer koaxial zur Vollwelle des Vorgeleges angeordneten Hohlwelle verbindbar. Hohl- und Vollwelle des Vorgeleges sind ferner über eine Schalteinrichtung miteinander verbindbar. Jedoch ist beim Doppelkupplungsgetriebe der DE 10 2007 040 449 A1 die Zentralwelle des ersten Teilgetriebes nicht direkt mittels nur einer Schalteinrichtung mit der Ausgangswelle verbindbar. Hierfür müssen zwei Schalteinrichtungen gleichzeitig betätigt werden.

Ausgehend von dem vorstehend beschriebenen Stand der Technik ist es nun die Aufgabe der vorliegenden Erfindung, ein Kraftfahrzeuggetriebe zur Verfügung zu stellen, bei welchem mittels einer möglichst geringen Anzahl an Stirnradstufen und Schalteinrichtungen eine große Anzahl an lastschaltbaren Gangstufen darstellbar ist und ein Direktgang durch Betätigen lediglich eines Schaltelements wählbar ist.

Diese Aufgabe wird ausgehend vom Oberbegriff des Anspruchs 1 in Verbindung mit dessen kennzeichnenden Merkmalen gelöst. Die hierauf folgenden, abhängigen Ansprüche geben jeweils vorteilhafte Weiterbildungen der Erfindung wieder.

Gemäß der Erfindung umfasst ein Kraftfahrzeuggetriebe zwei Teilgetriebe, die über koaxial zueinander angeordnete Eingangswellen verfügen und jeweils abwechselnd durch Verbinden der je zugeordneten Eingangswelle mit einem Antrieb in einen Kraftfluss zu einem Abtrieb eingebunden werden können. Hierbei ist die Eingangswelle des ersten Teilgetriebes als Getriebezentralwelle und die Eingangswelle des zweiten Teilgetriebes als Getriebehohlwelle ausgeführt. Ein Abtrieb des Kraftfahrzeuggetriebes wird durch eine koaxial zu den Eingangswellen platzierte Ausgangswelle gebildet, wobei parallel zu den Eingangswellen und der Ausgangswelle ein Vorgelege vorgesehen ist. Eine vom Antrieb auf den Abtrieb übertragenen Drehbewegung kann nun mit einem von mehreren diskreten Übersetzungsverhältnissen übersetzt werden, welche jeweils durch Führen des Kraftflusses über das Vorgelege über zumindest zwei Stirnradstufen und durch Betätigung mindestens einer zugehörigen Schalteinrichtung unter Wechsel zwischen den Teilgetrieben lastschaltbar dargestellt werden.

Im Sinne der Erfindung sind die Schalteinrichtungen hierbei bevorzugt als Synchronisierungen ausgeführt, bei welchen eine formschlüssige Koppelung eines auf der jeweiligen Getriebewelle drehbar gelagerten Losrades einer Stirnradstufe über eine axial verschiebbare Schiebemuffe im Zusammenspiel mit einem am Losrad vorgesehenen Kupplungskörper und einem auf der Getriebewelle vorgesehenen Synchronkörper hergestellt wird, nachdem über ein oder mehrere zwischenliegende Synchronringe und deren Reibkonen im Zusammenspiel mit einem Reibkonus am Kupplungskörper Drehzahldifferenzen zwischen Losrad und Getriebewelle abgebaut wurden. Alternativ dazu ist jedoch prinzipiell auch eine Ausgestaltung der Schalteinrichtungen als formschlüssige Schalteinrichtungen, zum Beispiel als Klauenkupplungen, oder aber auch als kraftschlüssige Schalteinrichtungen, beispielsweise Lamellenkupplungen, denkbar.

Erfindungsgemäß wird ein Verbinden der Eingangswellen der beiden Teilgetriebe mit dem Antrieb insbesondere über je zugeordnete Lastschaltelemente vorgenommen, welche dabei bevorzugt in einer Doppelkupplung zusammengefasst sind. Eine Doppelkupplung ist dabei insbesondere als nasslaufende Doppelkupplung ausgestaltet, kann aber bei niedrigen zu übertragenden Drehmomenten auch trockenlaufend ausgeführt sein. Abgesehen von zwei Lastschaltelementen kann ein Verbinden der Eingangswellen aber auch über ein einzelnes die eine Eingangswelle mit dem Antrieb koppelndes Lastschaltelement und eine formschlüssige Kupplung zwischen den Eingangswellen gebildet sein, wobei ein Antriebsmoment beim Übergang vom einen auf das andere Teilgetriebe dabei durch eine elektrische Maschine dargestellt wird, welche während der Schaltung und Einbindung des anderen Teilgetriebes antreibt und mit der anderen Eingangswelle verbunden ist. Zudem ist durch Vorsehen eines Planetengetriebes aber auch eine gemeinsamt Bereitstellung eines Antriebsmoments durch eine elektrische Maschine und das Auftriebsaggregat des Fahrzeugs denkbar. Ferner kann auch noch ein Doppelschaltelement im Bereich der Eingangswellen vorgesehen sein.

Die Erfindung umfasst nun die technische Lehre, dass die Getriebehohlwelle des zweiten Teilgetriebes über eine erste Stirnradstufe mit einer Vollwelle des Vorgeleges verbunden ist, zu welcher zudem koaxial eine Hohlwelle vorgesehen ist. Diese Hohlwelle kann über eine erste Schalteinrichtung drehfest mit der Vollwelle gekoppelt werden und ist über eine zweite Stirnradstufe durch Betätigen einer zweiten Schalteinrichtung mit der Getriebezentralwelle des ersten Teilgetriebes koppelbar. Die Getriebezentralwelle wiederum kann mittels einer dritten Schalteinrichtung direkt mit der Ausgangswelle verbunden werden. Des Weiteren sind weitere Stirnradstufen zwischen der Ausgangswelle einerseits und der Vollwelle oder der Hohlwelle andererseits vorgesehen.

Mittels der erfindungsgemäßen Ausgestaltung eines Kraftfahrzeuggetriebes ist es möglich, mit einer geringen Anzahl an Stirnradstufen und Schalteinrichtungen eine große Anzahl an lastschaltbaren Gängen darzustellen. Denn durch die Art und Weise der Verbindungsmöglichkeiten zwischen den Eingangswellen, dem Vorgelege und der Ausgangswelle, sowie dem damit jeweils einhergehenden Führen des Kraftflusses über das Vorgelege oder aber direkt auf die Ausgangswelle kann mit den vorhandenen Stirnradstufen und durch eine Kombination der Betätigung zugehöriger Schalteinrichtungen eine entsprechende Ganganzahl realisiert werden. Dabei wird das Vorgelege lediglich durch eine Hohl- und eine Vollwelle gebildet, so dass das erfindungsgemäße Kraftfahrzeuggetriebe bei Darstellung der lastschaltbaren Gänge mit einer geringen Anzahl an Wellen auskommt. Schließlich ist durch die koaxiale Anordnung von Antrieb und Abtrieb, sowie durch das lediglich eine, parallele Vorgelege ein kompakter Aufbau in radialer Richtung verwirklicht.

Entsprechend einer vorteilhaften Ausführungsform der Erfindung sind die zweite und die dritte Schalteinrichtung in einem ersten Schaltpaket zusammengefasst, welches auf der Getriebezentralwelle angeordnet ist. Des Weiteren kann die Hohlwelle des Vorgeleges zudem mittels Betätigen einer vierten Schalteinrichtung über eine dritte Stirnradstufe mit der Ausgangswelle gekoppelt werden. Ferner ist die Vollwelle des Vorgeleges über eine vierte Stirnradstufe durch Betätigung einer fünften Schalteinrichtung, über eine fünfte Stirnradstufe mittels einer sechsten Schalteinrichtung und über eine Rückwärtsfahrstufe durch Betätigung einer siebten Schalteinrichtung jeweils mit der Ausgangswelle verbindbar. Mittels Zusammenfassens der zweiten und dritten Schalteinrichtung in einem Schaltpaket können die beiden Schalteinrichtungen über einen gemeinsamen Aktuator jeweils abwechselnd betätigt werden, was den Aufbau einer Getriebesteuerung des erfindungsgemäßen Kraftfahrzeuggetriebes entsprechend vereinfacht. Des Weiteren lässt sich durch Vorsehen der weiteren Stirnradstufen eine entsprechende Ganganzahl mit wenigen Schalteinrichtungen darstellen. Ein Schaltpaket ist im Sinne der Erfindung dabei bevorzugt als Doppelsynchronisierung ausgestaltet.

In Weiterbildung der vorgenannten Variante sind die vierte Schalteinrichtung und die fünfte Schalteinrichtung in einem zweiten Schaltpaket, sowie die sechste Schalteinrichtung und die siebte Schalteinrichtung in einem dritten Schaltpaket zusammengefasst. Hierdurch können auch die die vierte Schalteinrichtung und die fünfte Schalteinrichtung abwechselnd durch einen gemeinsamen Aktuator und die sechste Schalteinrichtung und die siebte Schalteinrichtung wechselweise durch eine gemeinsamen Aktuator betätigt werden, was den Aufbau einer Getriebesteuerung weiter vereinfacht. Zudem lassen sich hierdurch insgesamt sechs Vorwärtsgänge, sowie zwei Rückwärtsgänge realisieren, wobei die Vorwärtsgänge und die Rückwärtsgänge jeweils lastschaltbar dargestellt werden können.

Entsprechend einer weiteren Ausgestaltung der Erfindung ist die fünfte Stirnradstufe antriebsseitig und die Rückwärtsfahrstufe abtriebsseitig des dritten Schaltpakets platziert. Alternativ dazu ist die fünfte Stirnradstufe abtriebsseitig und die Rückwärtsfahrstufe antriebsseitig des dritten Schaltpakets vorgesehen. Im Sinne der Erfindung ist generell unter einer "antriebsseitigen" Platzierung zu einem Element eine Anordnung auf einer dem Antrieb zugewandten Seite des jeweiligen Elements zu verstehen, während mit einer "abtriebsseitigen" Anordnung generell eine Platzierung auf einer dem Abtrieb zugewandten Seite des Elements gemeint ist. Vorliegend ist also die fünfte Stirnradstufe hinsichtlich des dritten Schaltpakets entweder seitens des Antriebs oder des Abtriebs vorgesehen, während die Rückwärtsfahrstufe hierzu genau umgekehrt entweder seitens des Abtriebs oder des Antriebs angeordnet ist.

Im Falle einer Ausgestaltung eines Kraftfahrzeuggetriebes gemäß der vorstehend beschriebenen Varianten ergibt sich ein erster Vorwärtsgang durch Verbinden der Getriebezentralwelle des ersten Teilgetriebes mit dem Antrieb, sowie mittels Betätigen der ersten, der zweiten und der sechsten Schalteinrichtung, wohingegen ein zweiter Vorwärtsgang durch Koppeln der Getriebehohlwelle des zweiten Teilgetriebes mit dem Antrieb und Ansteuern der sechsten Schalteinrichtung darstellbar ist. Ferner wird ein dritter Vorwärtsgang geschaltet, indem die Getriebezentralwelle wiederum mit dem Antrieb verbunden wird und die zweite und die vierte Schalteinrichtung betätigt werden. Ein hierauf folgender, vierter Vorwärtsgang ergibt sich hingegen durch Koppeln der Getriebehohlwelle mit dem Antrieb, sowie Betätigen der ersten und der vierten Schalteinrichtung, während ein fünfter Vorwärtsgang durch Verbinden der Getriebezentralwelle mit dem Antrieb und einer Ansteuerung der dritten Schalteinrichtung darstellbar ist. Schließlich wird eine Drehbewegung des Antriebs mit einem Übersetzungsverhältnis eines sechsten Vorwärtsganges auf den Abtrieb übersetzt, indem die Getriebehohlwelle mit dem Antrieb gekoppelt und die fünfte Schalteinrichtung betätigt wird. Des Weiteren ergibt sich ein erster Rückwärtsgang durch Verbinden der Getriebezentralwelle des ersten Teilgetriebes mit dem Antrieb, sowie Betätigen der ersten, der zweiten und der siebten Schalteinrichtung, wohingegen ein zweiter Rückwärtsgang durch Koppeln der Getriebehohlwelle mit dem Antrieb und Ansteuerung der siebten Schalteinrichtung darstellbar ist. Vorteilhafterweise lassen sich somit durch die vorstehend beschriebene Ansteuerung der Schalteinrichtungen, sowie dem wechselweisen Verbinden der Getriebezentralwelle und der Getriebehohlwelle mit dem Antrieb insgesamt sechs geeignete lastschaltbare Vorwärtsgänge und zwei lastschaltbare Rückwärtsgänge darstellen.

Gemäß einer zu den im Vorfeld beschriebenen Varianten alternativen Ausgestaltung der Erfindung sind die vierte Schalteinrichtung und die siebte Schalteinrichtung in einem zweiten Schaltpaket und die fünfte Schalteinrichtung und die sechste Schalteinrichtung in einem dritten Schaltpaket zusammengefasst. In diesem Fall werden also die dritte Stirnradstufe und die Rückwärtsfahrstufe durch ein gemeinsames Schaltpaket und die vierte Stirnradstufe und die fünfte Stirnradstufe durch ein gemeinsames Schaltpaket geschaltet. Hierdurch kann erneut ein Aufbau einer Getriebesteuerung des erfindungsgemäßen Kraftfahrzeuggetriebes einfach gestaltet werden, da für das Schalten sämtlicher Stirnradstufen insgesamt nur vier Aktuatoren nötig sind, um Losräder der jeweiligen Stirnradstufen mit den je zugehörigen Wellen zu koppeln. Gleichzeitig können dabei sechs lastschaltbare Vorwärtsgänge und zwei lastschaltbare Rückwärtsgänge dargestellt werden.

In Weiterbildung der vorgenannten Ausgestaltung ist die vierte Stirnradstufe antriebsseitig und die fünfte Stirnradstufe abtriebsseitig des dritten Schaltpakets platziert. In einer hierzu alternativen Ausführungsform der Erfindung ist hingegen die vierte Stirnradstufe abtriebsseitig und die fünfte Stirnradstufe antriebsseitig zum dritten Schaltpaket angeordnet. Im Sinne der Erfindung ist es also möglich, die vierte Stirnradstufe entweder auf Seiten des Antriebs oder auf Seiten des Abtriebs relativ zum dritten Schaltpaket anzuordnen, wobei dann die fünfte Stirnradstufe auf einer dem Abtrieb zugewandte bzw. einer dem Antrieb zugewandten Seite des dritten Schaltpakets platziert ist.

Im Falle der vorgenannten Ausgestaltungen ergibt sich dann ein erster Vorwärtsgang durch Verbinden der Getriebezentralwelle des ersten Teilgetriebes mit dem Antrieb, sowie Betätigen der ersten, der zweiten und der fünften Schalteinrichtung, wohingegen ein zweiter Vorwärtsgang durch Koppeln der Getriebehohlwelle des zweiten Teilgetriebes mit dem Antrieb und Ansteuern der fünften Schalteinrichtung darstellbar ist. Ein hierauf folgender dritter Vorwärtsgang wird dann durch Verbinden der Getriebezentralwelle mit dem Antrieb, sowie Betätigen der zweiten und der vierten Schalteinrichtung geschaltet, ein weiterer, vierter Vorwärtsgang durch Koppeln der Getriebehohlwelle mit dem Antrieb und Ansteuern der sechsten Schalteinrichtung. Des Weiteren ergibt sich ein fünfter Vorwärtsgang durch Koppeln der Getriebezentralwelle mit dem Antrieb und bei Betätigung der dritten Schalteinrichtung, wohingegen ein sechster Vorwärtsgang durch Verbinden der Getriebehohlwelle mit dem Antrieb, sowie einer Ansteuerung der ersten und der vierten Schalteinrichtung dargestellt wird. Zudem ergibt sich ein erster Rückwärtsgang durch Verbinden der Getriebezentralwelle mit dem Antrieb, sowie durch Betätigen der ersten, der zweiten und der siebten Schalteinrichtung, während ein zweiter Rückwärtsgang durch Koppeln der Getriebehohlwelle mit dem Antrieb und Betätigen der siebten Schalteinrichtung geschaltet wird. Mittels der vorstehend beschriebenen Ansteuerung der einzelnen Schalteinrichtungen, sowie dem wechselseitigen Koppeln der beiden Eingangswellen mit dem Antrieb sind somit insgesamt sechs lastschaltbare Vorwärtsgänge und zwei lastschaltbare Rückwärtsgänge durch die insgesamt sechs Stirnradstufen und die sieben Schalteinrichtungen darstellbar.

Alternativ dazu ist ein erster Vorwärtsgang durch Verbinden der Getriebezentralwelle mit dem Antrieb, sowie Betätigen der ersten, der zweiten und der fünften Schalteinrichtung darstellbar. Ein weiterer, zweiter Vorwärtsgang ergibt sich durch Koppeln der Getriebehohlwelle mit dem Antrieb und Betätigen der fünften Schalteinrichtung, während ein dritter Vorwärtsgang durch Verbinden der Getriebezentralwelle mit dem Antrieb, sowie einer Ansteuerung der zweiten und der vierten Schalteinrichtung geschaltet wird. Ein weiterer, hierauf folgender vierter Vorwärtsgang wird durch Koppeln der Getriebehohlwelle mit dem Antrieb, sowie Betätigen der ersten und der vierten Schalteinrichtung dargestellt, ein fünfter Vorwärtsgang ist durch Verbinden der Getriebezentralwelle mit dem Antrieb und Betätigen der dritten Schalteinrichtung schaltbar. Schließlich ergibt sich ein sechster Vorwärtsgang durch Koppeln der Getriebehohlwelle mit dem Antrieb und Betätigen der sechsten Schalteinrichtung. Ferner wird ein erster Rückwärtsgang durch Verbinden der Getriebezentralwelle mit dem Antrieb, sowie Betätigen der ersten, der zweiten und der siebten Schalteinrichtung dargestellt, wohingegen sich ein zweiter Rückwärtsgang durch Koppeln der Getriebehohlwelle mit dem Antrieb und Ansteuerung der siebten Schalteinrichtung ergibt. Auch in diesem Fall ist es somit möglich, insgesamt sechs lastschaltbare Vorwärtsgänge und zwei lastschaltbare Rückwärtsgänge durch die insgesamt sechs Stirnradstufen und über die sieben Schalteinrichtungen darzustellen.

Im Rahmen einer weiteren alternativen Ansteuerung der Schalteinrichtungen ergibt sich ein erster Vorwärtsgang durch Verbinden der Getriebezentralwelle des ersten Teilgetriebes mit dem Antrieb, sowie Betätigen der ersten, der zweiten und der sechsten Schalteinrichtung, wohingegen ein zweiter Vorwärtsgang durch Koppeln der Getriebehohlwelle des zweiten Teilgetriebes mit dem Antrieb und Ansteuern der sechsten Schalteinrichtung darstellbar ist. Ein weiterer, dritter Vorwärtsgang wird durch Verbinden der Getriebezentralwelle mit dem Antrieb, sowie Betätigen der zweiten und der vierten Schalteinrichtung geschaltet, ein hierauf folgender, vierter Vorwärtsgang durch Koppeln der Getriebehohlwelle mit dem Antrieb und Ansteuern der fünften Schalteinrichtung. Schließlich ergibt sich ein fünfter Vorwärtsgang durch Verbinden der Getriebezentralwelle mit dem Antrieb und Betätigen der dritten Schalteinrichtung, während ein sechster Vorwärtsgang durch Koppeln der Getriebehohlwelle mit dem Antrieb, sowie Betätigen der ersten und der vierten Schalteinrichtung dargestellt wird. Zudem ergibt sich ein erster Rückwärtsgang durch Verbinden der Getriebezentralwelle mit dem Antrieb, sowie einer Betätigung der ersten, der zweiten und der siebten Schalteinrichtung, wobei ein hierauf folgender zweiter Rückwärtsgang durch Koppeln der Getriebehohlwelle mit dem Antrieb und Ansteuern der siebten Schalteinrichtung darstellbar ist. Folglich sind auch durch die oben beschriebene Ansteuerung der einzelnen Schalteinrichtungen und das wechselweise Verbinden der beiden Eingangswellen mit dem Antrieb des Kraftfahrzeuggetriebes wiederum sechs lastschaltbare Vorwärtsgänge, sowie zwei lastschaltbare Rückwärtsgänge darstellbar.

Weiter alternativ zu dem vorstehend Beschriebenen wird ein erster Vorwärtsgang durch Verbinden der Getriebezentralwelle mit dem Antrieb, sowie Betätigen der ersten, der zweiten und der sechsten Schalteinrichtung dargestellt. Ein hierauf folgender, zweiter Vorwärtsgang ergibt sich durch Koppeln der Getriebehohlwelle mit dem Antrieb und Ansteuern der sechsten Schalteinrichtung, wohingegen ein dritter Vorwärtsgang durch Verbinden der Getriebezentralwelle mit dem Antrieb, sowie Betätigen der zweiten und der vierten Schalteinrichtung schaltbar ist. Ferner ist ein vierter Vorwärtsgang durch Koppeln der Getriebehohlwelle mit dem Antrieb, sowie Betätigen der ersten und der vierten Schalteinrichtung darstellbar, während ein fünfter Vorwärtsgang durch Verbinden der Getriebezentralwelle mit dem Antrieb und Betätigen der dritten Schalteinrichtung geschaltet wird. Schließlich ergibt sich ein sechster Vorwärtsgang durch Koppeln der Getriebehohlwelle mit dem Antrieb und Betätigen der fünften Schalteinrichtung. Ein erster Rückwärtsgang ist durch Verbinden der Getriebezentralwelle mit dem Antrieb, sowie Betätigen der ersten, der zweiten und der siebten Schalteinrichtung darstellbar, wobei ein hierauf folgender, zweiter Rückwärtsgang durch Koppeln der Getriebehohlwelle mit dem Antrieb und Betätigen der siebten Schalteinrichtung geschaltet wird. Auch mit der vorstehend beschriebenen Ansteuerung der einzelnen Schalteinrichtungen und dem abwechselnden Verbinden der Eingangswellen der beiden Teilgetriebe mit dem Antrieb lassen sich, wie schon bei den vorhergehenden Varianten, insgesamt sechs lastschaltbare Vorwärtsgänge und zwei lastschaltbare Rückwärtsgänge darstellen.

In Weiterbildung der vorgenannten Varianten sind das zweite und das dritte Schaltpaket jeweils auf der Ausgangswelle angeordnet. Alternativ dazu ist das zweite Schaltpaket auf der Ausgangswelle platziert, wohingegen das dritte Schaltpaket auf der Vollwelle des Vorgeleges angeordnet ist. Im erstgenannten Fall kann durch Platzierung der beiden Schaltpakete auf der Ausgangswelle ein Massenträgheitsmoment auf die beiden Eingangswelle reduziert werden. Im zweitgenannten Fall, bei welcher das dritte Schaltpaket auf der Vollwelle des Vorgeleges angeordnet ist, während das zweite Schaltpaket auf der Ausgangswelle verbleibt, können die beim Schaltvorgang aufzubringenden Schaltkräfte des dritten Schaltpakets reduziert werden, da Drehzahlen der dem dritten Schaltpaket zugeordneten Losräder nicht mehr an eine Drehzahl der Ausgangswelle beim Synchronisiervorgang angeglichen werden. Hierdurch kann eine Belastung der Schalteinrichtungen des dritten Schaltpakets entsprechend vermindert werden, so dass diese Schalteinrichtungen ggf. kleiner ausgelegt werden können. Allerdings ist diese Platzierung abhängig von den diskreten Übersetzungen der dem dritten Schaltpaket zugeordneten Stirnradstufen, da bei hohen Übersetzungen zu große Differenzdrehzahlen über die Schalteinrichtungen abzubauen sind. Die Platzierung des dritten Schaltpakets auf dem Vorgelege hat des Weiteren den Vorteil, dass im Leerlauf bei stehendem Fahrzeug Losräder der dem dritten Schaltpaket zugeordneten Stirnradstufen nicht umlaufen und dementsprechend nicht zu einer Geräuschbildung beitragen.

Entsprechend einer weiteren vorteilhaften Ausgestaltung der Erfindung ist die erste Schalteinrichtung, über welche die Hohlwelle des Vorgeleges mit der Vollwelle des Vorgeleges koppelbar ist, antriebsseitig der Hohlwelle angeordnet. Alternativ dazu ist die erste Schalteinrichtung abtriebsseitig der Hohlwelle platziert. Die erste Variante hat hierbei den Vorteil, dass die erste Schalteinrichtung somit in axialer Richtung neben den weiteren Schalteinrichtungen und damit auch den Schaltpaketen liegend platziert ist, so dass ein ausreichender Platz für die einzelnen Schalteinrichtungen in radialer Richtung, sowie für die jeweils zugehörigen Aktuatoren gegeben ist.

Erfindungsgemäß kämmt zudem ein Zahnrad der zweiten oder der dritten Stirnradstufe mit einem Zahnrad einer Welle, welche im weiteren Verlauf mit einer elektrischen Maschine verbunden ist. Hierdurch ist eine Hybridisierung des erfindungsgemäßen Kraftfahrzeuggetriebes möglich, indem über das Zahnrad und die Welle die elektrische Maschine angetrieben und damit elektrische Energie erzeugt werden kann oder aber die elektrische Maschine zum Unterstützen einer Antriebsbewegung oder zum rein elektrischen Fahren antreibend auf die Welle und damit auf die jeweilige Stirnradstufe einwirkt. Die Koppelung der elektrischen Maschine über die Welle und das Zahnrad mit der zweiten oder der dritten Stirnradstufe hat hierbei insbesondere den Vorteil, dass bei der zweiten oder der dritten Stirnradstufe aufgrund der erfindungsgemäßen Platzierung der Schalteinrichtungen sowohl eine Verbindung zum Antrieb, als auch eine Verbindung zum Abtrieb getrennt werden kann. Somit kann bei Unterbrechung der Verbindung zum Antrieb auch ein rein elektrisches Fahren dargestellt werden, ohne dass Schleppverluste einer antriebsseitig vorgesehenen Doppelkupplung hervorgerufen werden. Durch die Möglichkeit einer abtriebsseitigen Entkoppelung kann bei Stillstand des Fahrzeuges ein Laden eines elektrischen Speichers dargestellt werden, indem die elektrische Maschine über die Stirnradstufe mit dem Antriebsaggregat des Kraftfahrzeuggetriebes verbunden ist, während zum Abtrieb keine Drehbewegung übertragen wird. Bevorzugt kämmt das Zahnrad dabei mit einem auf dem Vorgelege vorgesehenen Zahnrad der zweiten oder der dritten Stirnradstufe. Abgesehen davon ist es im Rahmen der Erfindung jedoch auch denkbar, zumindest eine elektrische Maschine im Bereich je einer der Wellen des Getriebes, an je einem Festrad der Stirnradstufen, an je einem Losrad der Stirnradstufen oder an je einem zusätzlichen Festrad anzuordnen. An den jeweiligen Positionen wird dann durch die elektrische Maschine entweder Energie rekuperiert oder eine Drehbewegung unterstützt oder aber ein rein elektrisches Fahren, d.h. ein Betreiben des Kraftfahrzeuggetriebes über die zumindest eine elektrische Maschine, ermöglicht.

Die Erfindung ist nicht auf die angegebene Kombination der Merkmale des Hauptanspruchs oder der abhängigen Ansprüche beschränkt. Es ergeben sich darüber hinaus Möglichkeiten, einzelne Merkmale, auch soweit sie aus den Ansprüchen, der nachfolgenden Beschreibung von Ausführungsformen oder unmittelbar aus den Zeichnungen hervorgehen, miteinander zu kombinieren. Die Bezugnahme der Ansprüche auf die Zeichnungen durch Verwendung von Bezugszeichen soll den Schutzumfang der Ansprüche nicht beschränken.

Weitere, vorteilhafte Ausgestaltungen der Erfindung ergeben sich aus der nachfolgenden Beschreibung bevorzugter Ausführungsformen der Erfindung, die Bezug auf die in den Zeichnungen dargestellten Fig. nimmt. Es zeigt:
- Fig. 1: eine schematische Darstellung eines erfindungsgemäßen Kraftfahrzeuggetriebes gemäß einer ersten bevorzugten Ausführungsform der Erfindung;
- Fig. 2: eine schematische Darstellung einer zweiten bevorzugten Ausgestaltung eines erfindungsgemäßen Kraftfahrzeuggetriebes;
- Fig. 3: eine schematische Ansicht eines erfindungsgemäßen Kraftfahrzeuggetriebes entsprechend einer dritten bevorzugten Ausführungsform der Erfindung;
- Fig. 4: eine schematische Darstellung einer vierten bevorzugten Ausgestaltung eines erfindungsgemäßen Kraftfahrzeuggetriebes;
- Fig. 5: ein beispielhaftes Schaltschema eines erfindungsgemäßen Kraftfahrzeuggetriebes gemäß den Fig. 1 bis 4;
- Fig. 6: eine schematische Darstellung eines erfindungsgemäßen Kraftfahrzeuggetriebes gemäß einer fünften bevorzugten Ausführungsform der Erfindung;
- Fig. 7: eine schematische Ansicht eines erfindungsgemäßen Kraftfahrzeuggetriebes gemäß einer sechsten bevorzugten Ausgestaltung der Erfindung;
- Fig. 8: eine schematische Darstellung einer siebten bevorzugten Ausführungsform eines erfindungsgemäßen Kraftfahrzeuggetriebes;
- Fig. 9: eine schematische Ansicht eines erfindungsgemäßen Kraftfahrzeuggetriebes entsprechend einer achten bevorzugten Ausgestaltung der Erfindung;
- Fig. 10: ein beispielhaftes Schaltschema eines erfindungsgemäßen Kraftfahrzeuggetriebes gemäß der Fig. 6 bis 9;
- Fig. 11: ein weiteres beispielhaftes Schaltschema eines erfindungsgemäßen Kraftfahrzeuggetriebes gemäß der Fig. 6 bis 9;
- Fig. 12: ein weiteres beispielhaftes Schaltschema eines Kraftfahrzeuggetriebes gemäß der Fig. 6 bis 9; und
- Fig. 13: ein weiteres beispielhaftes Schaltschema eines erfindungsgemäßen Kraftfahrzeuggetriebes entsprechend der Fig. 6 bis 9.

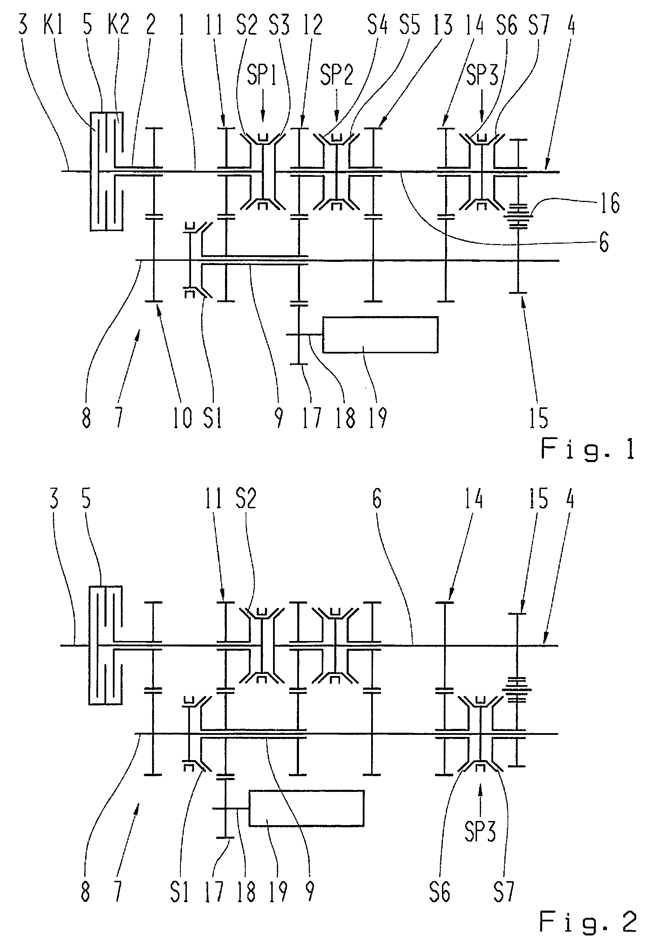

Aus Fig. 1 geht eine schematische Ansicht eines erfindungsgemäßen Kraftfahrzeuggetriebes gemäß einer ersten bevorzugten Ausführungsform der Erfindung hervor, bei welchem es sich bevorzugt um ein Getriebe eines Nutzfahrzeuges handelt. Dieses Kraftfahrzeuggetriebe umfasst dabei zwei Teilgetriebe, denen jeweils eine Eingangswelle zugeordnet ist. Dabei ist eine Eingangswelle des ersten Teilgetriebes als Getriebezentralwelle 1 ausgeführt, zu welcher die als Getriebehohlwelle 2 ausgeführte Eingangswelle des zweiten Teilgetriebes koaxial verläuft. Die beiden Teilgetriebe können nun jeweils abwechselnd in einen Kraftfluss von einem Antrieb 3 des Kraftfahrzeuggetriebes, welcher mit einem Antriebsaggregat des Kraftfahrzeuges in Verbindung steht, zu einem Abtrieb 4 eingebunden werden, indem entweder die Getriebezentralwelle 1 des ersten Teilgetriebes über ein zugeordnetes Lastschaltelement K1 oder die Getriebehohlwelle des zweiten Teilgetriebes über ein zugehöriges Lastschaltelement K2 mit dem Antrieb 3 gekoppelt wird. Die beiden Lastschaltelemente K1 und K2 sind dabei in einer Doppelkupplung 5 zusammengefasst, bei welcher es sich bevorzugt um eine nasslaufende Doppelkupplung handelt. Der Abtrieb 4 wird durch eine Ausgangswelle 6 gebildet, die koaxial zu der Getriebezentralwelle 1 und der Getriebehohlwelle 2 verläuft. Des Weiteren ist parallel zu der Getriebezentralwelle 1, der Getriebehohlwelle 2 und der Ausgangswelle 6 ein Vorgelege 7 vorgesehen, welches sich aus einer Vollwelle 8 und einer Hohlwelle 9 zusammensetzt, wobei die Hohlwelle 9 koaxial zur Vollwelle 8 verläuft.

Eine Drehbewegung des Antriebs 3 kann nun über eines der beiden Teilgetriebe übersetzt auf die Ausgangswelle 6 und damit auf den Abtrieb 4 übertragen werden, indem der Kraftfluss ausgehend von der Getriebezentralwelle 1 bzw. der Getriebehohlwelle 2 über das Vorgelege 7 auf die Ausgangswelle 6 geführt wird. Die Getriebehohlwelle 2 steht zu diesem Zweck über eine erste Stirnradstufe 10 permanent mit der Vollwelle 8 des Vorgeleges 7 in Verbindung, welche mit der Hohlwelle 9 über eine erste Schalteinrichtung S1 drehfest verbunden werden kann. Vorliegend ist diese Schalteinrichtung S1 dabei als Synchronisierung ausgeführt, deren - vorliegend nicht weiter im Detail dargestellte - Schiebemuffe über einen - ebenfalls nicht weiter dargestellten - Aktuator gezielt aus einer Neutralstellung in die die Vollwelle 8 mit der Hohlwelle 9 formschlüssig koppelnde Position verschoben werden kann, wobei bei dieser Verschiebung auf dem Fachmann bekannte Art und Weise durch die Synchronisierung Drehzahlunterschiede zwischen der Vollwelle 8 und der Hohlwelle 9 abgebaut werden.

Die Hohlwelle 9 wiederum trägt ein Festrad einer zweiten Stirnradstufe 11, deren Losrad auf der Getriebezentralwelle 1 drehbar gelagert ist und mittels einer zweiten Schalteinrichtung S2 drehfest mit der Getriebezentralwelle 1 verbunden werden kann, so dass eine Drehbewegung der Getriebezentralwelle 1 mit einer diskreten Übersetzung der zweiten Stirnradstufe 11 auf die Hohlwelle 9 übertragen wird. Axial benachbart zu der zweiten Schalteinrichtung S2 ist des Weiteren eine dritte Schalteinrichtung S3 vorgesehen, welche in einer betätigten Stellung die Getriebezentralwelle 1 drehfest mit der Ausgangswelle 6 koppelt, so dass eine Drehbewegung der Getriebezentralwelle 1 direkt auf die Ausgangswelle 6 und damit auf den Abtrieb 4 des Kraftfahrzeuggetriebes übertragen wird.

Wie des Weiteren aus Fig. 1 ersichtlich ist, sind die zweite Schalteinrichtung S2 und die dritte Schalteinrichtung S3 in einem ersten Schaltpaket SP1 zusammengefasst, und verfügen dementsprechend über ein gemeinsames Schaltelement. Vorliegend sind die Schalteinrichtungen S2 und S3 zudem jeweils als Synchronisierungen ausgebildet, so dass das erste Schaltpaket SP1 nach Art einer Doppelsynchronisierung aufgebaut ist, bei welcher eine zwischen den Schalteinrichtungen S2 und S3 befindliche Schiebemuffe über einen je zugehörigen Aktuator aus einer zentralen Position entweder in eine Betätigungsstellung der zweiten Schalteinrichtung S2, in welcher dann das Losrad der zweiten Stirnradstufe 11 an der Getriebezentralwelle 1 festgesetzt wird, oder in eine Betätigungsstellung der dritten Schalteinrichtung S3 verschoben werden kann, in welcher dann die Getriebezentralwelle 1 starr mit der Ausgangswelle 6 gekoppelt ist.

Des Weiteren trägt die Hohlwelle 9 des Vorgeleges 7 ein Festrad einer dritten Stirnradstufe 12, welches mit einem auf der Ausgangswelle 6 drehbar gelagerten Losrad in Zahneingriff steht. Das Losrad der dritten Stirnradstufe 12 kann dabei über eine vierte Schalteinrichtung S4 drehfest mit der Ausgangswelle 6 verbunden werden, wobei in diesem Fall dann eine Drehbewegung der Hohlwelle 9 des Vorgeleges 7 entsprechend einer diskreten Übersetzung der dritten Stirnradstufe 12 mit einer Drehbewegung der Ausgangswelle 6 gekoppelt ist. Axial benachbart zu der vierten Schalteinrichtung S4 ist eine weitere, fünfte Schalteinrichtung S5 angeordnet, die in einer Betätigungsstellung ein Losrad einer vierten Stirnradstufe 13 an der Ausgangswelle 6 festsetzt. Dieses Losrad der vierten Stirnradstufe 13 steht dabei permanent im Zahneingriff mit einem Festrad der vierten Stirnradstufe 13, das drehfest auf der Vollwelle 8 des Vorgeleges 7 platziert ist. Folglich wird bei Koppelung des Losrades der vierten Stirnradstufe 13 mit der Ausgangswelle 6 eine Drehbewegung der Vollwelle 8 des Vorgeleges 7 mit einer diskreten Übersetzung der vierten Stirnradstufe 13 auf die Ausgangswelle 6 übertragen.

Wie hierbei aus Fig. 1 zu erkennen ist, sind die vierte Schalteinrichtung S4 und die fünfte Schalteinrichtung S5 in einem zweiten Schaltpaket SP2 zusammengefasst, welches vorliegend analog zum ersten Schaltpaket SP1 als Doppelsynchronisierung ausgestaltet ist und auf der Ausgangswelle 6 angeordnet ist. Dementsprechend kann eine gemeinsame Schaltmuffe der vierten Schalteinrichtung S4 und der fünften Schalteinrichtung S5 aus einer Neutralstellung entweder in eine betätigende Stellung der vierten Schalteinrichtung S4 oder eine betätigende Stellung der fünften Schalteinrichtung S5 durch einen je zugehörigen Aktuator bewegt werden.

Die Vollwelle 8 des Vorgeleges 9 trägt im weiteren Verlauf ein Festrad einer fünften Stirnradstufe 14, das mit einem, drehbar auf der Ausgangswelle 6 gelagerten Losrad kämmt. Dieses Losrad der fünften Stirnradstufe 14 kann dabei wiederum über eine sechste Schalteinrichtung S6 drehfest mit der Ausgangswelle 6 gekoppelt werden, so dass eine Drehbewegung der Vollwelle 8 mit einer diskreten Übersetzung der fünften Stirnradstufe 14 mit einer Drehbewegung der Ausgangswelle 6 gekoppelt ist. Axial benachbart zu der sechsten Schalteinrichtung S6 ist zudem eine weitere, siebte Schalteinrichtung S7 angeordnet, welche bei Betätigung ein Losrad einer Rückwärtsfahrstufe 15 mit der Ausgangswelle 6 verbindet. Dieses Losrad der Rückwärtsfahrstufe 15 steht über ein auf einer Zwischenwelle 16 drehbar gelagerten Zwischenrad mit einem, auf der Vollwelle 8 drehfest angeordneten Festrad in Verbindung. Bei Koppelung des Losrades der Rückwärtsfahrstufe 15 mit der Ausgangswelle 6 über die siebte Schalteinrichtung S7 wird dementsprechend eine Drehbewegung der Vollwelle 8 mit einer diskreten Gesamtübersetzung, welche sich aus den Einzelübersetzungen von Festrad und Zwischenrad, sowie Zwischenrad und Losrad der Rückwärtsfahrstufe 15 zusammensetzt, auf die Ausgangswelle 6 übertragen. Dabei wird eine gleiche Drehrichtung von Vollwelle 8 und Ausgangswelle 6 hervorgerufen, so dass die Ausgangswelle 6 im Endeffekt eine entgegengesetzte Drehbewegung zu der Getriebezentralwelle 1 und auch der Getriebehohlwelle 2 ausführt und damit eine Rückwärtsfahrt des jeweiligen Kraftfahrzeuges darstellbar ist.

Wie zudem aus Fig. 1 ersichtlich ist, sind die sechste Schalteinrichtung S6 und die siebte Schalteinrichtung S7 in einem dritten Schaltpaket SP3 zusammengefasst und jeweils als Synchronisierungen ausgeführt, so dass auch das dritte Schaltpaket SP3 analog zu den beiden Schaltpaketen 17 und 22 als Doppelsynchronisierung ausgeführt ist. Ein in Form einer Schaltmuffe vorliegendes Schaltelement dieses dritten Schaltpakets 28 kann gezielt über einen zugehörigen Aktuator aus einer Neutralstellung entweder in eine Betätigungsstellung der sechsten Schalteinrichtung S6 oder in eine Betätigungsstellung der siebten Schalteinrichtung S7 bewegt werden, wobei dann das jeweilige Losrad der fünften Stirnradstufe 14 bzw. der Rückwärtsfahrstufe 15 drehfest mit der Ausgangswelle 6 verbunden wird.

Als weitere Besonderheit kämmt mit dem auf der Hohlwelle 9 angeordnete Festrad der dritten Stirnradstufe 12 ein Zahnrad 17, das drehfest auf einer Welle 18 angeordnet ist, wobei diese Welle 18 mit einer elektrischen Maschine 19 in Verbindung steht. Dementsprechend ist eine Drehbewegung der Hohlwelle 9 über den Zahneingriff von dem Festrad der dritten Stirnradstufe 12 mit dem Zahnrad 17 mit einer hierdurch definierten Übersetzung mit einer Drehbewegung der Welle 18 gekoppelt. Die elektrische Maschine 19 kann dabei entweder als Generator fungieren und bei Antrieb über die Welle 18 elektrische Energie in einen - vorliegend nicht weiter dargestellten - elektrischen Speicher einspeisen, oder aber als elektrischer Motor betrieben werden, welcher bei Strombeaufschlagung antreibend auf die Welle 18 einwirkt. In der Folge kann die elektrische Maschine 19 entweder über die Hohlwelle 9 angetrieben werden oder aber die Hohlwelle 9 antreiben und hierbei dann entweder eine Drehbewegung der Hohlwelle 9 unterstützen, oder diese Bewegung einleiten.

Die Anbindung der elektrischen Maschine 19 über das Zahnrad 17 an die dritte Stirnradstufe 12 hat hierbei den Vorteil, dass die elektrische Maschine 19 somit über die erste Schalteinrichtung S1 von der Doppelkupplung 5 und zum anderen mittels der vierten Schalteinrichtung S4 vom Abtrieb 4 abgekoppelt werden kann. Im letztgenannten Fall wird ein Betreiben der elektrischen Maschine 19 ohne Übertragung einer Drehbewegung auf den Abtrieb 4 ermöglicht, so dass die elektrische Maschine auch bei stehendem Fahrzeug zum Laden eines elektrischen Speichers betrieben werden kann. Zum Anderen kann über die elektrische Maschine 19 aber auch ein rein elektrisches Fahren dargestellt werden, indem diese über die erste Schalteinrichtung 13 von der Doppelkupplung 5 und damit auch vom Antrieb 3 entkoppelt wird, wobei aufgrund der Abkoppelung von der Doppelkupplung 5 Schleppverluste der Kupplung 5 verhindert werden können.

Aus Fig. 2 geht eine zweite bevorzugte Ausführungsform eines erfindungsgemäßen Kraftfahrzeuggetriebes hervor. Im Unterschied zu der im Vorfeld beschriebenen Variante sind die Festräder der fünften Stirnradstufe 14 und der Rückwärtsfahrstufe 15 in diesem Fall auf der Ausgangswelle 6 platziert, so dass Losräder der fünften Stirnradstufe 14 und der Rückwärtsfahrstufe 15 auf der Vollwelle 8 des Vorgeleges 7 drehbar gelagert sind und jeweils über das ebenfalls dort vorgesehene, dritte Schaltpaket SP3 drehfest mit der Vollwelle 8 verbunden werden können. Das dritte Schaltpaket SP3 setzt sich hierbei erneut aus der sechsten Schalteinrichtung S6 und der siebten Schalteinrichtung S7 zusammen. Als weiterer Unterschied kämmt das Zahnrad 17 der mit der elektrischen Maschine 19 in Verbindung stehenden Welle 18 mit dem auf der Hohlwelle 9 angeordneten Festrad der zweiten Stirnradstufe 11. Hierbei ist erneut eine Standladefähigkeit, sowie ein rein elektrischer Antrieb über die elektrische Maschine 19 darstellbar, da zum Einen über die zweite Schalteinrichtung S2 ein Abkoppeln von der Doppelkupplung 5 und damit auch vom Antrieb 3 und auf der anderen Seite über die erste Schalteinrichtung S1 ein Abkuppeln von der Vollwelle 8 und damit im weiteren Verlauf vom Abtrieb 4 darstellbar ist.

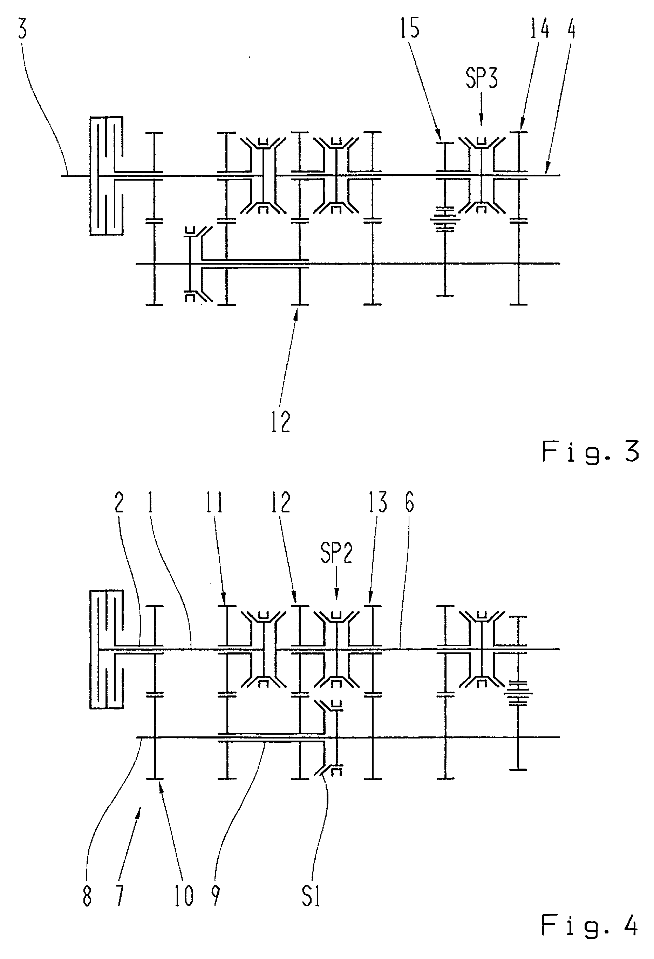

Des Weiteren geht aus Fig. 3 eine dritte bevorzugte Ausgestaltung eines erfindungsgemäßen Kraftfahrzeuggetriebes hervor. Unterschiedlich zu der Variante gemäß Fig. 1 ist hierbei, dass die fünfte Stirnradstufe 14 und die Rückwärtsfahrstufe 15 hinsichtlich ihrer Positionierung zu dem dritten Schaltpaket SP3 vertauscht sind. So ist die Rückwärtsfahrstufe 15 auf einer dem Antrieb 3 zugewandten Seite des dritten Schaltpakets SP3 und die fünfte Stirnradstufe 14 auf einer dem Abtrieb 4 zugewandten Seite des dritten Schaltpakets SP3 platziert. Des Weiteren ist in diesem Fall keine elektrische Maschine im Bereich der dritten Stirnradstufe 12 vorgesehen.

Aus Fig. 4 ist eine weitere, vierte bevorzugte Ausführungsform eines erfindungsgemäßen Kraftfahrzeuggetriebes ersichtlich, wobei sich diese Ausführung von der Variante gemäß Fig.1 dahingehend unterscheidet, dass die erste Schalteinrichtung S1 in diesem Fall nicht antriebsseitig der Hohlwelle 9 zwischen der ersten Stirnradstufe 10 und der zweiten Stirnradstufe 11 vorgesehen ist, sondern abtriebsseitig der Hohlwelle 9 und zwischen der dritten Stirnradstufe 12 und der vierten Stirnradstufe 13 platziert ist, so dass die erste Schalteinrichtung S1 axial auf Höhe des zweiten Schaltpakets SP2 liegt. Allerdings muss hierbei in radialer Richtung zwischen dem Vorgelege 7 und der Ausgangswelle 6, sowie der Getriebezentralwelle 1 und der Getriebehohlwelle 2 ein entsprechender Bauraum vorhanden sein, um die erste Schalteinrichtung S1 und das zweite Schaltpaket SP2 und deren Aktuatorik unterzubringen.

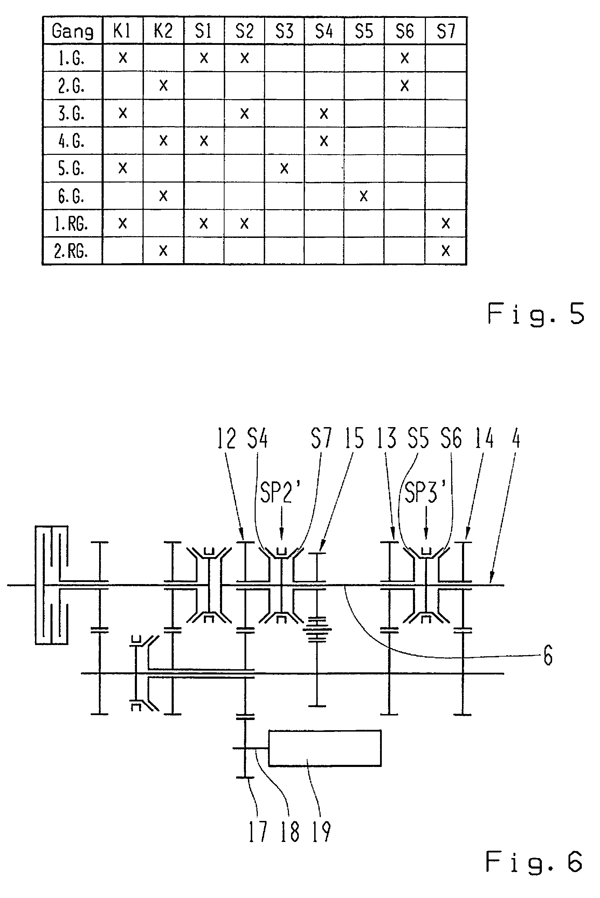

Aus Fig. 5 ist nun ein beispielhaftes Schaltschema dargestellt, welches sich durch jede der Getriebevarianten gemäß der Fig. 1 bis 4 realisieren lässt. Insgesamt sind dabei sechs Vorwärtsgänge, sowie zwei Rückwärtsgänge lastschaltbar darstellbar. Hierbei wird jeder der Gänge durch Betätigung ein oder mehrerer der Schalteinrichtungen S1-S7, sowie einem Verbinden der Getriebezentralwelle 1 über das Lastschaltelement K1 bzw. der Getriebehohlwelle 2 über das Lastschaltelement K2 mit dem Antrieb 3 dargestellt. In den Gängen 1 bis 4 wird der Kraftfluss dabei über das Vorgelege 7 und über je zwei der Stirnradstufen 10 bis 12 und 14 geführt, so dass eine Drehbewegung des Antriebs 3 ins Langsame übersetzt auf die Ausgangswelle 6 und damit auf den Abtrieb 4 übertragen wird. Im fünften Gang wird hingegen eine Drehbewegung des Antriebs 3 starr auf die Ausgangswelle 6 und damit direkt übertragen. Im Falle des sechsten Ganges erfolgt eine Übersetzung der Drehbewegung des Antriebs 3 ins Schnelle, so dass ein Schongang des Kraftfahrzeuggetriebes ausgestaltet wird.

Die Lastschaltbarkeit der sechs Vorwärtsgänge und der beiden Rückwärtsgänge wird auf dem Fachmann bekannte Art und Weise dadurch erreicht, dass bei Fahren in einem Gang und bei Führen des Kraftflusses über eines der beiden Teilgetriebe in dem jeweils anderen Teilgetriebe schon die an der Darstellung eines nachfolgenden Ganges beteiligten Schalteinrichtungen S1-S7 vorgewählt werden und zum letztendlichen Umschalten nur noch das Lastschaltelement K1 bzw. K2 des einen Teilgetriebes geöffnet und unmittelbar darauf das Lastschaltelement K2 bzw. K1 des anderen Teilgetriebes geschlossen wird. In der Folge ist damit ein nahezu zugkraftunterbrechnungsfreies Fahren möglich.

Vorliegend wird der erste Vorwärtsgang dadurch dargestellt, dass das Lastschaltelement K1 geschlossen und damit die Getriebezentralwelle 1 mit dem Antrieb 3 verbunden wird, sowie die erste Schalteinrichtung S1, die zweite Schalteinrichtung S2 und die sechste Schalteinrichtung S6 betätigt werden. Zum Wechsel in den zweiten Vorwärtsgang werden dann die beiden Schalteinrichtungen S1 und S2 wiederum abgeschaltet, wobei vorher zum letztendlichen Wechsel das Lastschaltelement K1 zu öffnen und Lastschaltelement K2 zu schließen ist. In den hierauf folgenden dritten Vorwärtsgang kann dann unter erneutem Wechsel zwischen den Lastschaltelementen K1 und K2 übergegangen werden, wobei im Vorfeld die zweite Schalteinrichtung S2 und die vierte Schalteinrichtung S4 zu betätigen sind und nach erfolgtem Wechsel die sechste Schalteinrichtung S6 abzuschalten ist. Der vierte Vorwärtsgang ergibt sich durch Betätigen der ersten Schalteinrichtung S1 und der vierten Schalteinrichtung S4, wobei zum Wechsel ausgehend vom dritten Vorwärtsgang dann das Lastschaltelement K2 zu schließen und das Lastschaltelement K1 zu öffnen ist. Im fünften Vorwärtsgang wird dann durch die dritte Schalteinrichtung S3 die Getriebezentralwelle 1 direkt mit der Ausgangswelle 6 gekoppelt, wobei zum Wechsel hierbei Lastschaltelement K2 zu öffnen und Lastschaltelement K1 zu schließen ist. Bei weiterem Hochschalten ergibt sich der sechste Vorwärtsgang durch Betätigen der fünften Schalteinrichtung S5 und einem darauffolgenden Öffnen des Lastschaltelements K1 und Betätigen des Lastschaltelements K2. Der erste Rückwärtsgang ergibt sich hingegen durch Betätigen der ersten Schalteinrichtung S1, der zweiten Schalteinrichtung S2 und der siebten Schalteinrichtung S7, sowie durch Verbinden der Getriebezentralwelle 1 mit dem Antrieb 3 über das Lastschaltelement K1. Zum Wechsel in den hierauf folgenden zweiten Rückwärtsgang ist dann das Lastschaltelement K1 zu öffnen und das Lastschaltelement K2 zu schließen, wobei in der Folge dann die erste Schalteinrichtung S1 und die zweite Schalteinrichtung S2 in einen unbetätigten Zustand zu überführen sind.

Die vorstehend beschriebenen Varianten eines Kraftfahrzeuggetriebes gemäß der Fig. 1 bis 4 können hinsichtlich einer Anordnung des dritten Schaltpakets SP3, der fünften Stirnradstufe 11 und der Rückwärtsfahrstufe 15, der ersten Schalteinrichtung S1 und dem Vorsehen und der Anordnung einer elektrischen Maschine 19 beliebig miteinander kombiniert werden. Hierdurch ergeben sich dann weitere Varianten eines erfindungsgemäßen Kraftfahrzeuggetriebes.

Ferner geht aus Fig. 6 eine fünfte bevorzugte Ausgestaltung eines erfindungsgemäßen Kraftfahrzeuggetriebes hervor. Im Unterschied zu der Ausgestaltung gemäß Fig. 1 ist die Rückwärtsfahrstufe 15 axial benachbart und abtriebsseitig der dritten Stirnradstufe 10 vorgesehen, wobei die vierte Schalteinrichtung S4 und die siebte Schalteinrichtung S7 dabei in einem zweiten Schaltpaket SP2' zusammengefasst sind. Dementsprechend ist die vorher an der Position der Rückwärtsfahrstufe 15 befindliche vierte Stirnradstufe 13 weiter axial in Richtung Abtrieb 4 verschoben und benachbart zu der fünften Stirnradstufe 11 platziert. Die fünfte Schalteinrichtung S5 der vierten Stirnradstufe 13 und die sechste Schalteinrichtung S6 der fünften Stirnradstufe 11 sind dabei in einem dritten Schaltpaket SP3' zusammengefasst, welches auf der Ausgangswelle 6 platziert ist und dabei nach Art einer Doppelsynchronisierung ausgeführt ist. Hinsichtlich der weiteren Ausgestaltungen entspricht die Variante eines erfindungsgemäßen Kraftfahrzeuggetriebes nach Fig. 6 ansonsten dem Beschriebenen zu Fig. 1.

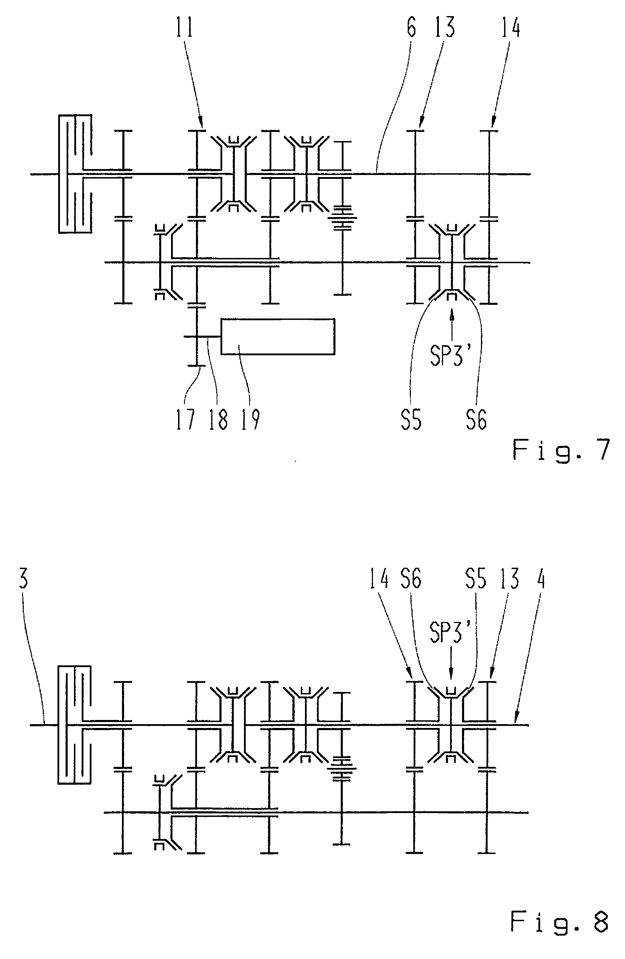

Eine sechste bevorzugte Ausgestaltung eines erfindungsgemäßen Kraftfahrzeuggetriebes geht aus der schematischen Darstellung von Fig. 7 hervor. Diese Ausgestaltung unterscheidet sich zu der Variante nach Fig. 6 dahingehend, dass Festräder der dritten Stirnradstufe 13 und der fünften Stirnradstufe 11 jeweils auf der Ausgangswelle 6 angeordnet sind, so dass die mit diesen jeweils kämmenden Losräder auf der Vollwelle 8 des Vorgeleges 7 platziert sind. Dementsprechend ist auch das dritte Schaltpaket SP3' auf die Vollwelle 8 verlagert, mit dem Vorteil, dass sich die beim Schaltvorgang der fünften Schalteinrichtung S5 oder der sechsten Schalteinrichtung S6 aufzubringende Schaltkräfte reduzieren. Zudem laufen die Losräder der vierten Stirnradstufe 13 und der fünften Stirnradstufe 11 bei stehendem Fahrzeug nicht um, sondern stehen gemeinsam mit der Ausgangswelle 6 still, wodurch sie nicht zu einer Geräuschbildung beitragen. Als weiterer Unterschied kämmt das Zahnrad 17 der mit der elektrischen Maschine 19 in Verbindung stehenden Welle 18, wie schon bei der Variante gemäß Fig. 2, mit dem auf der Hohlwelle 9 angeordneten Festrad der zweiten Stirnradstufe 11.

Eine weitere, siebte bevorzugte Ausführungsform eines Kraftfahrzeuggetriebes geht aus Fig. 8 hervor. Diese unterscheidet sich von der Variante gemäß Fig. 6 dadurch, dass die vierte Stirnradstufe 13 und die fünfte Stirnradstufe 11 hinsichtlich ihrer Anordnung zum dritten Schaltpaket SP3' gespiegelt platziert sind. So ist die vierte Stirnradstufe 13 auf Seiten des Abtriebs 4 und die fünfte Stirnradstufe 11 auf Seiten des Antriebs 3 des dritten Schaltpakets SP3' vorgesehen. Ferner ist im Falle der Ausgestaltung gemäß Fig. 8 keine elektrische Maschine im Bereich der Stirnradstufe 12 vorgesehen.

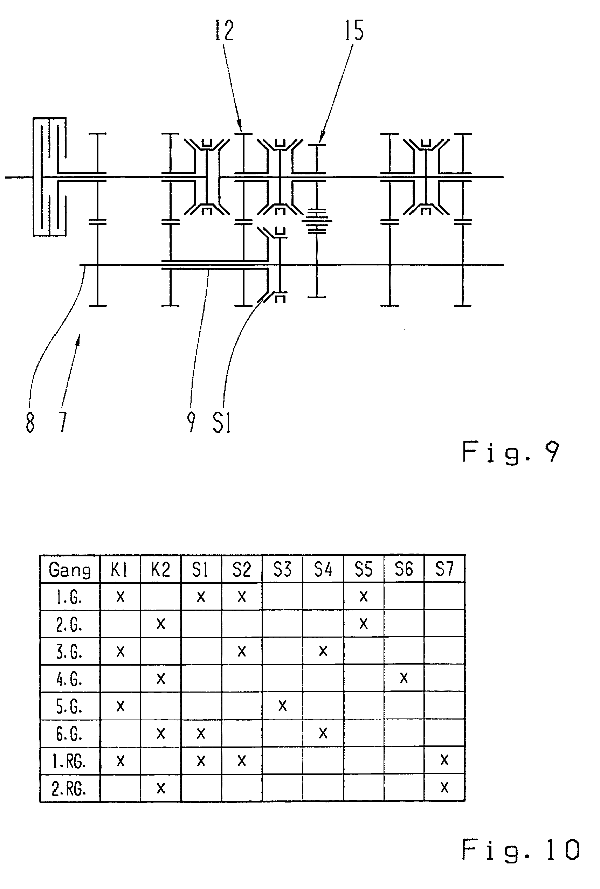

Schließlich geht noch aus Fig. 9 eine achte bevorzugte Ausführungsform eines erfindungsgemäßen Kraftfahrzeuggetriebes hervor, welches sich von der in Fig. 6 dargestellten Variante dahingehend unterscheidet, dass die erste Schalteinrichtung S1, über welche die Hohlwelle 9 des Vorgeleges 7 mit der Vollwelle 8 gekoppelt werden kann, abtriebsseitig der Hohlwelle 9 zwischen der dritten Stirnradstufe 12 und der Rückwärtsfahrstufe 15 liegend platziert ist. Zudem ist erneut keine elektrische Maschine im Bereich der Stirnradstufe 12 vorgesehen.

Mittels der einzelnen Varianten gemäß den Fig. 6 bis 9 lassen sich insgesamt sechs lastschaltbare Vorwärtsgänge sowie zwei lastschaltbare Rückwärtsgänge darstellen, wobei entsprechend einer Betätigung der einzelnen Schalteinrichtungen S1-S7 hierbei vier beispielhafte und aus den Fig. 10 bis 13 hervorgehende Schaltschemata möglich sind. Erneut wird dabei in den ersten vier Vorwärtsgängen eine Drehbewegung des Antriebs 3 ins Langsame übersetzt auf die Ausgangswelle 6 und damit den Abtrieb 4 übertragen, während der fünfte Vorwärtsgang einen starren Durchtrieb vom Antrieb 3 auf den Abtrieb 4 darstellt. Im sechsten Vorwärtsgang wird hingegen eine Drehbewegung des Antriebs 3 ins Schnelle übersetzt auf den Abtrieb 4 übertragen, so dass ein Schongang des erfindungsgemäßen Kraftfahrzeuggetriebes ausgestaltet wird. Die Lastschaltbarkeit der Vorwärtsgänge und der Rückwärtsgänge wird auf dem Fachmann bekannte Art und Weise durch wechselweises Koppeln der Getriebezentralwelle 1 über das Lastschaltelement K1 und der Getriebehohlwelle 2 über das Lastschaltelement K2 mit dem Antrieb und ein entsprechendes Vorwählen des jeweils nachfolgenden Ganges durch Betätigung der entsprechenden Schalteinrichtungen S1 bis S7 ermöglicht.

Aus Fig. 10 geht nun ein erstes beispielhaftes Schaltschemata zur Darstellung der einzelnen Gänge der Getriebevarianten gemäß der Fig. 6 bis 9 hervor. Wie zu erkennen ist, ergibt sich der erste Vorwärtsgang durch Verbinden der Getriebezentralwelle 1 mit dem Antrieb 3 über das Lastschaltelement K1, sowie Betätigen der ersten Schalteinrichtung S1, der zweiten Schalteinrichtung S2 und der fünften Schalteinrichtung S5. Zum Schalten in den zweiten Vorwärtsgang ist das Lastschaltelements K1 zu öffnen und Lastschaltelement K2 zu schließen, wobei in der Folge dann noch die erste Schalteinrichtung S1 und die zweite Schalteinrichtung S2 in einen unbetätigten Zustand zu überführen sind. Zum weiteren Hochschalten in den dritten Vorwärtsgang sind dann die zweite Schalteinrichtung S2 und die vierte Schalteinrichtung S4 zu betätigen, wobei anschließend die Getriebehohlwelle 2 vom Antrieb 3 zu trennen und die Getriebezentralwelle 1 über Lastschaltelement K1 mit dem Antrieb 3 zu verbinden ist. Der hierauf folgende vierte Vorwärtsgang ergibt sich durch Schließen des Lastschaltelements K2 und einer im Vorfeld stattgefundenen Betätigung der sechsten Schalteinrichtung S6. Zum Schalten des fünften Vorwärtsganges ist im Vorfeld die Getriebezentralwelle 1 mittels der dritten Schalteinrichtung S3 starr mit der Ausgangswelle 6 zu koppeln und anschließend die Getriebezentralwelle 1 über Lastschaltelement K1 mit dem Antrieb 3 nach einem Öffnen von Lastschaltelemente K2 in Verbindung zu bringen. Schließlich ergibt sich der sechste Vorwärtsgang durch Betätigen der ersten Schalteinrichtung S1 und der vierten Schalteinrichtung S4, sowie Koppeln der Getriebehohlwelle 2 mit dem Antrieb 3 über Lastschaltelement K2. Der erste Rückwärtsgang wird dargestellt, indem die erste Schalteinrichtung S1, die zweite Schalteinrichtung S2 und die siebte Schalteinrichtung S7 betätigt werden und zudem die Getriebezentralwelle 1 über das Lastschaltelement K1 mit dem Antrieb 3 verbunden wird. Ein Wechsel in den zweiten Rückwärtsgang wird vollzogen, indem das Lastschaltelement K1 wiederum geöffnet und das Lastschaltelement K2 geschlossen wird, wobei letzteres damit die Getriebehohlwelle 2 mit dem Antrieb 3 verbindet.

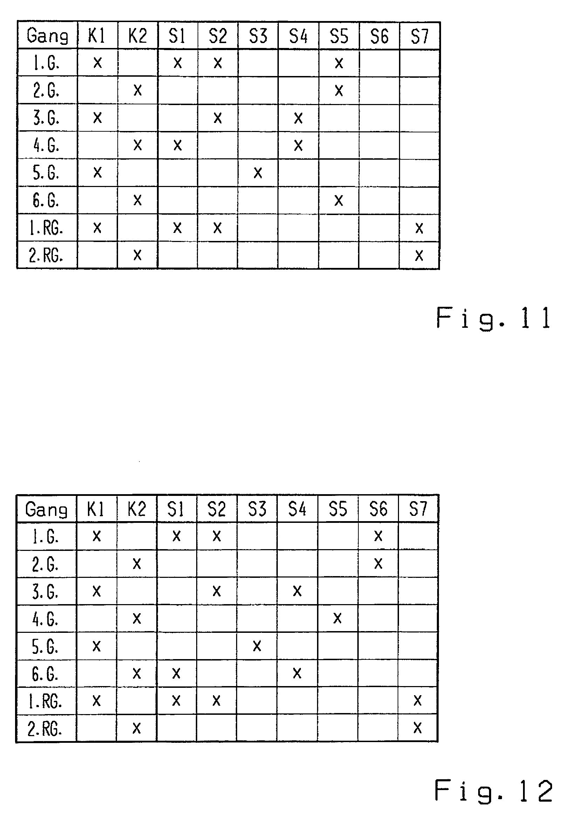

Ein weiteres beispielhaftes Schaltschema der einzelnen Ausgestaltungen gemäß den Fig. 6 bis 9 ist aus Fig. 11 ersichtlich. Im Unterschied zu der Variante nach Fig. 10 wird der vierte Vorwärtsgang durch Schließen des Lastschaltelements K2 und Betätigen der sechsten Schalteinrichtung S6 dargestellt. Ferner ergibt sich der sechste Vorwärtsgang durch Schließen des Lastschaltelements K2 und Ansteuern der ersten Schalteinrichtung S1 und der vierten Schalteinrichtung S4. Die übrigen Gänge werden hingegen analog zu dem Schaltschema nach Fig. 10 dargestellt.

Ferner geht aus Fig. 12 ein weiteres mögliches Schaltschema für die Getriebevarianten gemäß den Fig. 6 bis 9 hervor. Unterschiedlich zu dem in Fig. 10 dargestellten Schaltschema und dem diesbezüglich Beschriebenen wird der erste Vorwärtsgang durch Schließen des Lastschaltelements K1 und Betätigen der ersten Schalteinrichtung S1, der zweiten Schalteinrichtung S2 und der sechsten Schalteinrichtung S6 dargestellt. Des Weiteren wird auch durch Betätigung der sechsten Schalteinrichtung S6 in Kombination mit Schalten des Lastschaltelements K2 der zweite Vorwärtsgang dargestellt. Ferner ist zum Schalten des vierten Vorwärtsganges die fünfte Schalteinrichtung S5 zu betätigen und das Lastschaltelement K2 zu schließen. Die übrigen Gänge entsprechen dann aber wiederum dem in Fig. 10 dargestellten Schaltschema.

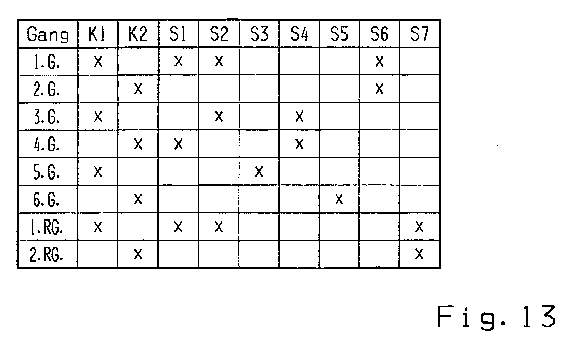

Schließlich geht aus Fig. 13 noch eine weitere Variante eines möglichen Schaltschemas für die Ausführungsformen eines Kraftfahrzeuggetriebes entsprechend der Fig. 6 bis 9 hervor. Ähnlich zu der vorhergehende Variante nach Fig. 12 und im Unterschied zu dem Schaltschemata nach Fig. 10 ist hierbei jeweils die sechste Schalteinrichtung S6 anstelle der fünften Schalteinrichtung S5 an der Darstellung des ersten und des zweiten Vorwärtsganges beteiligt. Des Weiteren wird der vierte Vorwärtsgang durch Ansteuern der ersten Schalteinrichtung S1 und der vierten Schalteinrichtung S4 und Schließen des Lastschaltelements K2 dargestellt. Hinsichtlich des sechsten Vorwärtsganges ist dann die fünfte Schalteinrichtung S5 zu betätigen und das Lastschaltelement K2 zu schließen. Die übrigen Gänge entsprechen wiederum dem Getriebeschemata aus Fig. 10.

Die vorstehend beschriebenen Varianten eines Kraftfahrzeuggetriebes gemäß der Fig. 6 bis 9 sind hinsichtlich einer Anordnung des dritten Schaltpakets SP3', der vierten Stirnradstufe 13 und der fünften Stirnradstufe 14, der ersten Schalteinrichtung S1 und dem Vorsehen und der Anordnung einer elektrischen Maschine 19 beliebig miteinander kombinierbar. Hierdurch ergeben sich dann weitere Getriebevarianten.

Neben den bei den einzelnen Getriebevarianten gemäß der Fig. 1 bis 4 und 6 bis 9 zur Anwendung kommenden Synchronisierungen als Schalteinrichtungen S1 bis S7 ist im Rahmen der Erfindung prinzipiell auch eine anderweitige Ausgestaltung als formschlüssige Kupplungen, beispielsweise Klauenkupplungen, denkbar. Zudem können die Schalteinrichtungen S1-S7 auch als kraftschlüssige Kupplungen, bevorzugt als Lamellenkupplungen ausgestaltet sein. Ferner ist es erfindungsgemäß neben den in den Figuren dargestellten Varianten der Anordnung einer elektrischen Maschine 19 zum einen auch vorstellbar, mehrere elektrische Maschinen vorzusehen, und diese ggf. auch an einer oder mehreren Wellen, einem Festrad der Stirnradstufen 10 bis 15, an einem Losrad der Stirnradstufen 10 bis 15 oder an einem zusätzlich vorzusehenden Festrad, ähnlich zu Zahnrad 17, anzuordnen.

Im Übrigen kann die aus den beiden Lastschaltelementen K1 und K2 bestehende Doppelkupplung 5 auch durch eine elektrische Maschine ersetzt werden, welche alleine während den Schaltungen für eine entsprechende Abstützung sorgt oder in Kombination mit dem Antriebsaggregat und einem zusätzlichen Planetengetriebe die Charakteristik einer Doppelkupplung 5 nachempfindet. Ggf. ist bei diesen beiden Varianten dann noch ein zusätzliches Doppelschaltelement vorzusehen, durch welche die beiden Varianten umschaltbar sind.

Mittels der einzelnen Ausgestaltungen eines erfindungsgemäßen Kraftfahrzeuggetriebes ist es somit möglich, eine hohe Anzahl an lastschaltbaren Gängen bei Verwendung weniger Stirnradstufen und weniger Schalteinrichtungen darzustellen. Ferner ist eine gute Hybridisierfähigkeit des erfindungsgemäßen Kraftfahrzeuggetriebes gegeben.

### Bezugszeichen

- 1: Getriebezentralwelle
- 2: Getriebehohlwelle
- 3: Antrieb
- 4: Abtrieb
- 5: Doppelkupplung
- 6: Ausgangswelle
- 7: Vorgelege
- 8: Vollwelle
- 9: Hohlwelle
- 10: erste Stirnradstufe
- 11: zweite Stirnradstufe
- 12: dritte Stirnradstufe
- 13: vierte Stirnradstufe
- 14: fünfte Stirnradstufe
- 15: Rückwärtsfahrstufe
- 16: Zwischenwelle
- 17: Zahnrad
- 18: Welle
- 19: Elektrische Maschine

- K1: Lastschaltelement
- K2: Lastschaltelement

- S1: erste Schalteinrichtung
- S2: zweite Schalteinrichtung
- S3: dritte Schalteinrichtung
- S4: vierte Schalteinrichtung
- S5: fünfte Schalteinrichtung
- S6: sechste Schalteinrichtung
- S7: siebte Schalteinrichtung
- SP1: erstes Schaltpaket
- SP2: zweites Schaltpaket
- SP3: drittes Schaltpaket
- SP2': zweites Schaltpaket
- SP3': drittes Schaltpaket

## Patentansprüche

1. Kraftfahrzeuggetriebe, umfassend zwei Teilgetriebe, die über koaxial zueinander angeordnete Eingangswellen verfügen und jeweils abwechselnd durch Verbinden der je zugeordneten Eingangswelle mit einem Antrieb (3) in einen Kraftfluss zu einem Abtrieb (4) einbindbar sind, wobei die Eingangswelle des ersten Teilgetriebes als Getriebezentralwelle (1) und die Eingangswelle des zweiten Teilgetriebes als Getriebehohlwelle (2) ausgeführt ist, wobei der Abtrieb (4) beider Teilgetriebe durch eine koaxial zu den Eingangswellen platzierte Ausgangswelle (6) gebildet und parallel zu den Eingangswellen und der Ausgangswelle (6) ein Vorgelege (7) vorgesehen ist, und wobei eine vom Antrieb (3) auf den Abtrieb (4) übertragene Drehbewegung mit einem von mehreren diskreten Übersetzungsverhältnissen übersetzbar ist, welche jeweils durch Führen des Kraftflusses über das Vorgelege (7) über zumindest zwei Stirnradstufen (10 bis 15) und durch Betätigung mindestens einer zugehörigen Schalteinrichtung (S1, S2, S4 bis S7) unter Wechsel zwischen den Teilgetrieben lastschaltbar darstellbar sind, wobei die Getriebehohlwelle (2) des zweiten Teilgetriebes über eine erste Stirnradstufe (10) mit einer Vollwelle (8) des Vorgeleges (7) verbunden ist, zu welcher zudem koaxial eine Hohlwelle (9) vorgesehen ist, wobei die Hohlwelle (9) über eine erste Schalteinrichtung (S1) drehfest mit der Vollwelle (8) verbindbar und über eine zweite Stirnradstufe (11) durch Betätigen einer zweiten Schalteinrichtung (S2) mit der Getriebezentralwelle (1) des ersten Teilgetriebes koppelbar ist, und wobei weitere Stirnradstufen (12 bis 15) zwischen der Ausgangswelle (6) einerseits sowie der Vollwelle (8) oder Hohlwelle (9) andererseits vorgesehen sind, **dadurch gekennzeichnet, dass** die Getriebezentralwelle (1) des ersten Teilgetriebes mittels einer dritten Schalteinrichtung (S3) direkt mit der Ausgangswelle (6) verbindbar ist.

2. Kraftfahrzeuggetriebe nach Anspruch 1, **dadurch gekennzeichnet, dass** die zweite (S2) und die dritte Schalteinrichtung (S3) in einem ersten Schaltpaket (SP1) zusammengefasst sind, welches auf der Getriebezentralwelle (1) angeordnet ist, dass die Hohlwelle (9) zudem mittels Betätigen einer vierten Schalteinrichtung (S4) über eine dritte Stirnradstufe (12) mit der Ausgangswelle (6) koppelbar ist, und dass die Vollwelle (8) über eine vierte Stirnradstufe (13) durch Betätigung einer fünften Schalteinrichtung (S5), über eine fünfte Stirnradstufe (14) mittels einer sechsten Schalteinrichtung (S6) und über eine Rückwärtsfahrstufe (15) durch Betätigung einer siebten Schalteinrichtung (S7) jeweils mit der Ausgangswelle (6) verbindbar ist.

3. Kraftfahrzeuggetriebe nach Anspruch 2, **dadurch gekennzeichnet, dass** die vierte Schalteinrichtung (S4) und die fünfte Schalteinrichtung (S5) in einem zweiten Schaltpaket (SP2), sowie die sechste Schalteinrichtung (S6) und die siebte Schalteinrichtung (S7) in einem dritten Schaltpaket (SP3) zusammengefasst sind.

4. Kraftfahrzeuggetriebe nach Anspruch 3, **dadurch gekennzeichnet, dass** die fünfte Stirnradstufe (14) antriebsseitig und die Rückwärtsfahrstufe (15) abtriebsseitig des dritten Schaltpakets (SP3) platziert ist.

5. Kraftfahrzeuggetriebe nach Anspruch 3, **dadurch gekennzeichnet, dass** die fünfte Stirnradstufe (14) abtriebsseitig und die Rückwärtsfahrstufe (15) antriebsseitig des dritten Schaltpakets (SP3) platziert ist.

6. Kraftfahrzeuggetriebe nach Anspruch 2, **dadurch gekennzeichnet, dass** die vierte Schalteinrichtung (S4) und die siebte Schalteinrichtung (S7) in einem zweiten Schaltpaket (SP2'), sowie die fünfte Schalteinrichtung (S5) und die sechste Schalteinrichtung (S6) in einem dritten Schaltpaket (SP3') zusammengefasst sind.

7. Kraftfahrzeuggetriebe nach Anspruch 6, **dadurch gekennzeichnet, dass** die vierte Stirnradstufe (13) antriebsseitig und die fünfte Stirnradstufe (14) abtriebsseitig des dritten Schaltpakets (SP3') platziert ist.

8. Kraftfahrzeuggetriebe nach Anspruch 6, **dadurch gekennzeichnet, dass** die vierte Stirnradstufe (13) abtriebsseitig und die fünfte Stirnradstufe (14) antriebsseitig des dritten Schaltpakets (SP3') platziert ist.

9. Kraftfahrzeuggetriebe nach Anspruch 3 oder 6, **dadurch gekennzeichnet, dass** das zweite (SP2; SP2') und das dritte Schaltpaket (SP3; SP3') jeweils auf der Ausgangswelle (6) angeordnet sind.

10. Kraftfahrzeuggetriebe nach Anspruch 3 oder 6, **dadurch gekennzeichnet, dass** das zweite Schaltpaket (SP2; SP2') auf der Ausgangswelle (6) platziert ist, wohingegen das dritte Schaltpaket (SP3; SP3') auf der Vollwelle (8) des Vorgeleges (7) angeordnet ist.

11. Kraftfahrzeuggetriebe nach Anspruch 1, **dadurch gekennzeichnet, dass** die erste Schalteinrichtung (S1) antriebsseitig der Hohlwelle (9) angeordnet ist.

12. Kraftfahrzeuggetriebe nach Anspruch 1, **dadurch gekennzeichnet, dass** die erste Schalteinrichtung (S1) abtriebsseitig der Hohlwelle (9) platziert ist.

13. Kraftfahrzeuggetriebe nach Anspruch 1, **dadurch gekennzeichnet, dass** ein Zahnrad der zweiten (11) oder der dritten Stirnradstufe (12) mit einem Zahnrad (17) einer Welle (18) kämmt, welche mit einer elektrischen Maschine (19) verbunden ist.

## Claims

1. Motor vehicle gearbox, comprising two sub-gearboxes which have input shafts arranged coaxially with respect to one another and which can, by virtue of the respectively associated input shaft being connected to a drive input (3), be in each case alternately incorporated into a power flow to a drive output (4), wherein the input shaft of the first sub-gearbox is designed as a gearbox central shaft (1) and the input shaft of the second sub-gearbox is designed as a gearbox hollow shaft (2), wherein the drive output (4) of both sub-gearboxes is formed by an output shaft (6) positioned coaxially with respect to the input shafts, and a countershaft (7) is provided parallel to the input shafts and to the output shaft (6), and wherein a rotational movement transmitted from the drive input (3) to the drive output (4) can be increased in speed with one of multiple discrete transmission ratios which can in each case be implemented, with shifts being capable of being performed under load, by virtue of the power flow being conducted via the countershaft (7) via at least two spur gear stages (10 to 15) and by virtue of at least one associated shift device (S1, S2, S4 to S7) being actuated, with a changeover between the sub-gearboxes, wherein the gearbox hollow shaft (2) of the second sub-gearbox is connected by way of a first spur gear stage (10) to a solid shaft (8) of the countershaft (7), with a hollow shaft (9) furthermore being provided coaxially with respect to said solid shaft, wherein the hollow shaft (9) can be connected rotationally conjointly to the solid shaft (8) by way of a first shift device (S1) and can be coupled to the gearbox central shaft (1) of the first sub-gearbox by way of a second spur gear stage (11) by virtue of a second shift device (S2) being actuated, and wherein further spur gear stages (12 to 15) are provided between, at one side, the output shaft (6) and, at the other side, the solid shaft (8) or hollow shaft (9), **characterized in that** the gearbox central shaft (1) of the first sub-gearbox can be connected directly to the output shaft (6) by way of a third shift device (S3).

2. Motor vehicle gearbox according to Claim 1, **characterized in that** the second (S2) and the third shift device (S3) are combined in a first shift pack (SP1) which is arranged on the gearbox central shaft (1), **in that** the hollow shaft (9) can furthermore be coupled to the output shaft (6) by actuation of a fourth shift device (S4) by way of a third spur gear stage (12), and **in that** the solid shaft (8) can be connected to the output shaft (6) in each case by way of a fourth spur gear stage (13) by virtue of a fifth shift device (S5) being actuated, by way of a fifth spur gear stage (14) by means of a sixth shift device (S6), and by way of a reverse travel stage (15) by virtue of a seventh shift device (S7) being actuated.

3. Motor vehicle gearbox according to Claim 2, **characterized in that** the fourth shift device (S4) and the fifth shift device (S5) are combined in a second shift pack (SP2), and the sixth shift device (S6) and the seventh shift device (S7) are combined in a third shift pack (SP3).

4. Motor vehicle gearbox according to Claim 3, **characterized in that** the fifth spur gear stage (14) is positioned at the drive input side, and the reverse travel stage (15) is positioned at the drive output side, of the third shift pack (SP3).

5. Motor vehicle gearbox according to Claim 3, **characterized in that** the fifth spur gear stage (14) is positioned at the drive output side, and the reverse travel stage (15) is positioned at the drive input side, of the third shift pack (SP3).

6. Motor vehicle gearbox according to Claim 2, **characterized in that** the fourth shift device (S4) and the seventh shift device (S7) are combined in a second shift pack (SP2'), and the fifth shift device (S5) and the sixth shift device (S6) are combined in a third shift pack (SP3').

7. Motor vehicle gearbox according to Claim 6, **characterized in that** the fourth spur gear stage (13) is positioned at the drive input side, and the fifth spur gear stage (14) is positioned at the drive output side, of the third shift pack (SP3').

8. Motor vehicle gearbox according to Claim 6, **characterized in that** the fourth spur gear stage (13) is positioned at the drive output side, and the fifth spur gear stage (14) is positioned at the drive input side, of the third shift pack (SP3').

9. Motor vehicle gearbox according to Claim 3 or 6, **characterized in that** the second (SP2; SP2') and the third shift pack (SP3; SP3') are arranged in each case on the output shaft (6).

10. Motor vehicle gearbox according to Claim 3 or 6, **characterized in that** the second shift pack (SP2; SP2') is positioned on the output shaft (6), whereas the third shift pack (SP3; SP3') is arranged on the solid shaft (8) of the countershaft (7).

11. Motor vehicle gearbox according to Claim 1, **characterized in that** the first shift device (S1) is arranged on the drive input side of the hollow shaft (9).

12. Motor vehicle gearbox according to Claim 1, **characterized in that** the first shift device (S1) is positioned on the drive output side of the hollow shaft (9).

13. Motor vehicle gearbox according to Claim 1, **characterized in that** a gearwheel of the second (11) or of the third spur gear stage (12) meshes with a gearwheel (17) of a shaft (18) which is connected to an electric machine (19).

## Revendications

1. Transmission de véhicule automobile comprenant deux transmissions partielles qui disposent d'arbres d'entrée disposés coaxialement l'un par rapport à l'autre et qui peuvent être reliés à chaque fois en alternance, par connexion de l'arbre d'entrée respectivement associé, à un entraînement (3) dans un flux de forces allant à une prise de force (4), l'arbre d'entrée de la première transmission partielle étant réalisé sous forme d'arbre central de transmission (1) et l'arbre d'entrée de la deuxième transmission partielle étant réalisé sous forme d'arbre creux de transmission (2), la prise de force (4) des deux transmissions partielles étant formée par un arbre de sortie (6) placé coaxialement par rapport aux arbres d'entrée et une transmission intermédiaire (7) étant prévue parallèlement aux arbres d'entrée et à l'arbre de sortie (6), et un mouvement de rotation transmis depuis l'entraînement (3) à la prise de force (4) pouvant être démultiplié avec un parmi plusieurs rapports de démultiplication distincts, qui peuvent être constitués de manière à commuter la charge à chaque fois par guidage du flux de forces par le biais de la transmission intermédiaire (7) sur au moins deux étages de pignons droits (10 à 15) et par actionnement d'au moins un dispositif de commutation associé (S1, S2, S4 à S7) avec changement entre les transmissions partielles, l'arbre creux de transmission (2) de la deuxième transmission partielle étant connecté par le biais d'un premier étage de pignon droit (10) à un arbre plein (8) de la transmission intermédiaire (7), coaxialement auquel est en outre prévu un arbre creux (9), l'arbre creux (9) pouvant être connecté de manière solidaire en rotation à l'arbre plein (8) par le biais d'un premier dispositif de commutation (S1) et pouvant être accouplé par le biais d'un deuxième étage de pignon droit (11) par actionnement d'un deuxième dispositif de commutation (S2) au premier arbre central de transmission (1) de la première transmission partielle, et d'autres étages de pignons droits (12 à 15) étant prévus d'une part entre l'arbre de sortie (6) et d'autre part l'arbre plein (8) ou l'arbre creux (9), **caractérisée en ce que** l'arbre central de transmission (1) de la première transmission partielle peut être connecté directement au moyen d'un troisième dispositif de commutation (S3) à l'arbre de sortie (6).

2. Transmission de véhicule automobile selon la revendication 1, **caractérisée en ce que** le deuxième (S2) et le troisième (S3) dispositif de commutation sont réunis dans un premier paquet de commutation (SP1) qui est disposé sur l'arbre central de transmission (1), **en ce que** l'arbre creux (9) peut en outre être accouplé à l'arbre de sortie (6) au moyen d'un actionnement d'un quatrième dispositif de commutation (S4) par le biais d'un troisième étage de pignon droit (12), et **en ce que** l'arbre plein (8) peut être connecté par le biais d'un quatrième étage de pignon droit (13) par actionnement d'un cinquième dispositif de commutation (S5), par le biais d'un cinquième étage de pignon droit (14) au moyen d'un sixième dispositif de commutation (S6) et par le biais d'un étage de marche arrière (15) par actionnement d'un septième dispositif de commutation (S7) à chaque fois à l'arbre de sortie (6).

3. Transmission de véhicule automobile selon la revendication 2, **caractérisée en ce que** le quatrième dispositif de commutation (S4) et le cinquième dispositif de commutation (S5) sont réunis dans un deuxième paquet de commutation (SP2), et le sixième dispositif de commutation (S6) et le septième dispositif de commutation (S7) sont réunis dans un troisième paquet de commutation (SP3).

4. Transmission de véhicule automobile selon la revendication 3, **caractérisée en ce que** le cinquième étage de pignon droit (14) est placé du côté de l'entraînement et l'étage de marche arrière (15) est placé du côté de la prise de force du troisième paquet de commutation (SP3).

5. Transmission de véhicule automobile selon la revendication 3, **caractérisée en ce que** le cinquième étage de pignon droit (14) est placé du côté de la prise de force et l'étage de marche arrière (15) est placé du côté de l'entraînement du troisième paquet de commutation (SP3).

6. Transmission de véhicule automobile selon la revendication 2, **caractérisée en ce que** le quatrième dispositif de commutation (S4) et le septième dispositif de commutation (S7) sont réunis dans un deuxième paquet de commutation (SP2'), et le cinquième dispositif de commutation (S5) et le sixième dispositif de commutation (S6) sont réunis dans un troisième paquet de commutation (SP3').

7. Transmission de véhicule automobile selon la revendication 6, **caractérisée en ce que** le quatrième étage de pignon droit (13) est placé du côté de l'entraînement et le cinquième étage de pignon droit (14) est placé du côté de la prise de force du troisième paquet de commutation (SP3').

8. Transmission de véhicule automobile selon la revendication 6, **caractérisée en ce que** le quatrième étage de pignon droit (13) est placé du côté de la prise de force et le cinquième étage de pignon droit (14) est placé du côté de l'entraînement du troisième paquet de commutation (SP3').

9. Transmission de véhicule automobile selon la revendication 3 ou 6, **caractérisée en ce que** le deuxième (SP2 ; SP2') et le troisième (SP3 ; SP3') paquet de commutation sont disposés à chaque fois sur l'arbre de sortie (6).

10. Transmission de véhicule automobile selon la revendication 3 ou 6, **caractérisée en ce que** le deuxième paquet de commutation (SP2 ; SP2') est placé sur l'arbre de sortie (6), tandis que le troisième paquet de commutation (SP3 ; SP3') est disposé sur l'arbre plein (8) de la transmission intermédiaire (7).

11. Transmission de véhicule automobile selon la revendication 1, **caractérisée en ce que** le premier dispositif de commutation (S1) est disposé du côté de l'entraînement de l'arbre creux (9).

12. Transmission de véhicule automobile selon la revendication 1, **caractérisée en ce que** le premier dispositif de commutation (S1) est placé du côté de la prise de force de l'arbre creux (9).

13. Transmission de véhicule automobile selon la revendication 1, **caractérisée en ce qu'**une roue dentée du deuxième (11) ou du troisième (12) étage de pignon droit s'engage avec une roue dentée (17) d'un arbre (18) qui est connecté à une machine électrique (19).
